## Europäisches Patentamt

## European Patent Office

## Office européen des brevets

(11) Publication number: **0 185 447**
**B1**

# EUROPEAN PATENT SPECIFICATION

(45) Date of publication of patent specification: **30.01.91**

(21) Application number: **85307538.0**

(22) Date of filing: **18.10.85**

(51) Int. Cl.⁵: **F 16 B 35/00**

(54) **Alignment bolt assembly.**

(30) Priority: **23.10.84 US 663867**
**13.05.85 US 732930**

(43) Date of publication of application:
**25.06.86 Bulletin 86/26**

(45) Publication of the grant of the patent:
**30.01.91 Bulletin 91/05**

(84) Designated Contracting States:
**AT BE CH DE FR GB IT LI SE**

(56) References cited:
**DE-A-2 819 744**
**DE-A-2 824 676**
**DE-B-2 125 048**
**DE-C- 913 837**
**US-A-3 178 984**
**US-A-3 603 626**

## Description

This invention relates to a bolt assembly for use in securing and maintaining two or more parts in alignment with each other and to a bolted assembly provided with such a bolt assembly.

Although the present application specifically refers to a bolt assembly being used with connecting rods, it will be appreciated that such a bolt assembly may be utulized as a relatively inexpensive all-purpose alignment bolt assembly in almost any application in which two or more parts must be maintained in alignment. Additional examples of that would be where the head of a blower, hydraulic pump, or engine must be oriented to a cylinder block; also where an overhead cam of an engine must be oriented to the cylinder head.

Such parts including connecting rods for use in internal combustion engines require precision machining. The bearings in connecting rods, for example, are subjected to very large loads, and this has necessitated that the load be distributed evenly over the available bearing surface. If the bearing for any reason is uneven, oil which normally lubricates the bearing surface may be wiped away causing premature failure of the bearing which is expensive and difficult to repair.

In connecting rods the small end bearing has traditionally been pressed into place while the big end bearing is made of two semicircular bearing inserts. One of the bearing inserts fits against a surface on the connecting rod while the other fits against a surface on a bearing cap. In order to ensure that the bearing inserts are accurately aligned with each other, it is necessary that the respective surfaces of the connecting rod and bearing cap against which they fit are also accurately machined. To this end, the usual manufacturing procedure for a connecting rod of the type described is to machine parting or abutment surfaces on the connecting rod and bearing cap. These members are then clamped together into position and the bearing support surfaces against which the bearing inserts abut are machined simultaneously. The bearing cap and connecting rod are then disassembled, the bearing inserts put in place, and the entire assembly is then reassembled around a crank pin of a crankshaft and the parts bolted together.

It is important that when the connecting rod and bearing cap are assembled with the bearing inserts in place the bearing support surfaces reassume the alignment established when these surface were originally machined. To achieve this goal alignment holes have been bored through the bearing cap across the parting line and part way through the connecting rod to form a counterbore in the connecting rod. Screw-threads are formed at the inner end of each counterbore in the connecting rod to receive the bolts which hold the bearing cap to the connecting rod. The boring and screw-threading takes place while the connecting rod and bearing cap are still clamped together for machining of the bearing support surfaces. Upon reassembly of the connecting rod and bearing cap, proper alignment of the bores through the bearing cap with the counterbores in the connecting rod ensures proper alignment of the bearing support surface.

Special bolts have been used to try to achieve such alignment of the bores with corresponding counterbores. One such special bolt has an enlarged knurled portion spanning the parting line between the bearing cap and connecting rod. The enlarged knurled portion is precisely machined to have a diameter very nearly the same as that of the bores and counterbores in the bearing cap and connecting rod, respectively, so that the alignment passages are correctly located.

One disadvantage of the knurled bolt technique is that it is difficult and expenseive to manufacture. Specifically, the knurled bolt requires that the knurled portion be larger in diameter than the balance of the bolt and this enlarged knurled area be exactly concentric with the screw-threaded portion of the bolt. Such accurate concentricity has been difficult to maintain. Another difficulty with the enlarged knurled type connecting rod bolt has been the fact that some tolerance must be left between the alignment holes and the enlarged knurled portion of the bolt. This means that some misalignment of the bearing cap and connecting rod is still possible. A further disadvantage of the knurled bolt for aligning bearing caps and connecting rods lies in that fact that the knurling must permit the bolt to be rotated, and therefore, it cannot be a press or snug fit in the aligment passages.

Another technique which has been used to maintain correct alignment between a bearing cap and connecting rod, especially in diesel engines is to machine counterbores inward from the parting surface both of the connecting rod and of the bearing cap, insert a rigid tubular alignment inset into the counterbores, and then assemble the bolt through this insert.

A disadvantage to using the tubular alignment insert resides in the difficulty and cost of manufacture. Specifically, the alignment insert must be made to be a slight interference fit with at least one of the counterbores. This requires extremely accurate machining of the counterbores and the outside diameter of the tubular insert itself. Manufacturing tolerances must be very tight so that the cumulative error which would arise from a slightly undersized insert being matched with a slightly oversized counterbore leaves the alignment of bearing cap and connecting rod still within acceptable limits.

DE—A—2 824 676 discloses a bolt assembly which comprises a bolt having a head portion, a shank portion and a screw-threaded end portion at the end of the shank portion, two spring collars extending around the shank and an elastomeric mass is provided between the shank of the bolt and the bore of the two spring collars. There are no means for retaining the spring collars on the shank when the securing nut is disengaged. This patent shows a construction upon which the classifying part of Claim 1 is based.

DE—A—2 819 744 discloses a bolt assembly in which a slotted cylindrical bush is mounted on the shank portion of a bolt and rests against the shank. Thus the bush cannot contract in diameter and the outer diameter has to be machined accurately, as would the bores in which it is inserted.

According to the present invention there is provided a bolted assembly comprising first and second parts, bores extending through one of said parts and additional bores provided in other of said parts, the associated bores and additional bores in said parts being of equal diameter and being aligned when said parts are aligned, a bolt having a head portion at one end, a screw-threaded portion at the other end, a shank portion between them, and a slotted resilient sleeve surrounding the shank portion, an annular ridge being provided intermediate said sleeve and said screw-thread portion to retain the sleeve on the shank portion, the sleeve having an external diameter greater than the outside diameter of said screw-thread portion and its internal diameter or minimum internal diameter being greater than the diameter of the shank portion and less than the outside diameter of the annular ridge, the arrangement being such that in use the slotted resilient sleeve is compressed to the diameter of said bores and maintains the parts in alignment, characterised in that the annular ridge is located on said shank portion and in that the sleeve has an external diameter greater than the outside diameter of the annular ridge.

When the bolt assembly of the present invention is inserted into alignment passages, i.e., a through-bore through a bearing cap and a matching bore or counterbore in a connecting rod, the resilient sleeve is slightly compressed and tightly grips both bores or the bore and counterbore. The resiliency of the sleeve ensures that the bores (or bore and counterbore) are kept in perfect alignment.

The bolt assembly of the present invention may be manufactured using simple manufacturing techniques. The resilient sleeve is preferably made of steel which may be sheared in conventional manner. As will become apparent from what follows, the shearing produces bevelled surfaces around the perimeter of the sleeve which facilitate inserting the bolt assembly through the parts. When the sleeve has been formed, it is placed over a bolt blank which has a head portion already formed, and an elongated shank of uniform diameter. The sleeve has a length less than that of the shank, whereby screw-threads may be rolled onto the exposed end portion of the bolt shank. The rolling operation of the screw-threads deforms the blank material radially outwardly until its diameter is greater than the inside diameter of the sleeve. This effectively captures the sleeve on the bolt blank forming the bolt assembly of the present invention.

Alternatively, the maximum diameter of the screw-threads could be the same as the bolt shank, in which event the resilient sleeve would either not be retained on the bolt shank, or some other means would have to be provided for that purpose, for example, a ridge can be rolled on the shank inwardly of the screw-threads to retain the sleeve between the bolt head and ridge. This may be preferable to using the screw-threads to retain the resilient sleeve on the shank even when the screw-threads are of a larger diameter than the bolt shank, to ensure that the screw-threads are not damaged by the resilient sleeve during removal of the bolt assembly from the aligned parts. Also, two ridges may be rolled on the shank, one adjacent each end of the resilient sleeve, which would permit the sleeve to be retained anywhere along the length of the bolt shank. This is particularly advantageous in an application where the bolt shank is required to be relatively long and the sleeve need only be of a relatively short length but its location is critical.

Some embodiments of the invention will now be described, by way of example, with reference to the accompanying drawings, in which:—

Figure 1 is a side view, partially cut away, an alignment bolt assembly shown being used to maintain a bearing cap in alignment with a connecting rod;

Figure 2 is an exploded view, partially cut away, of the connecting rod assembly and the bolt assembly of Figure 1;

Figure 3 is an enlarged side view of one of the bolt assembles of Figures 1 and 2;

Figure 4 is a cross-section view, further enlarged, through the bolt assembly of Figure 3 taken along the line 4—4 indicated on Figure 3; it is noted that Figures 1—4 are not examples of the present invention;

Figure 5 is an exploded view of a bolt blank and spring pin used in forming the bolt assembly of Figure 3;

Figure 6 is an enlarged side view of an alternative form of spring pin;

Figure 7 is an enlarged side view, partially cut away, of an alignment bolt assembly embodying the present invention;

Figure 8 is an enlarged side view, partially cut away, of still another form of alignment bolt assembly embodying the present invention; and

Figure 9 is an enlarged side view, partially cut away, of yet another form of alignment bolt assembly embodying the present invention.

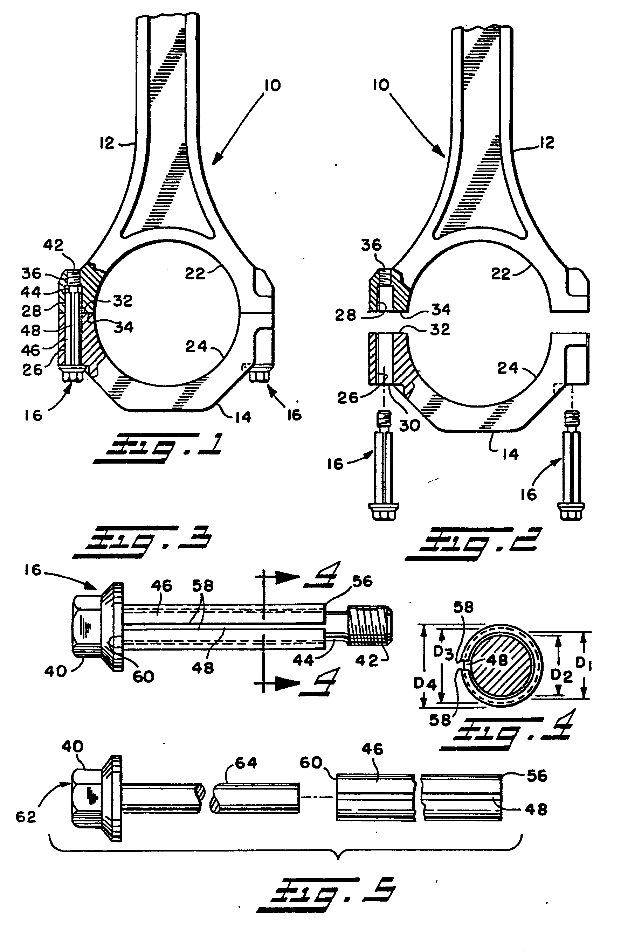

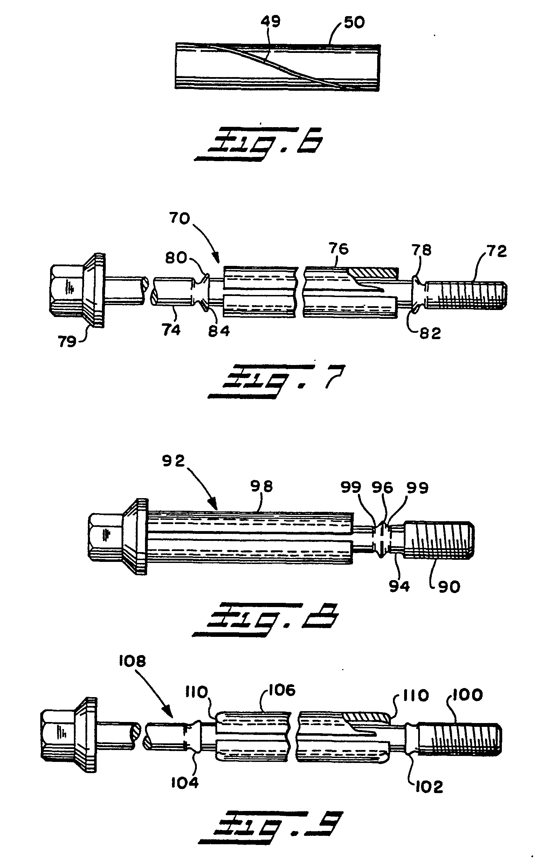

The connecting rod assembly 10 shown in Figures 1 and 2 by way of example includes a connecting rod 12, a bearing cap 14 and a pair of bolt assemblies 16 securing the bearing cap 14 to the connecting rod 12. The connecting rod 12 and bearing cap 14 include semicylindrical bearing support surfaces 22 and 24, respectively, which in use abut and support a conventional bearing insert. As is common, the surfaces 22 and 24 may be machined simultaneously by fixedly positioning the bearing cap 14 with respect to the connecting rod 12 and then machining a cylindrical passage through these two pieces. Once the bearing support surfaces 22 and 24 have been machined, the bearing cap 14 is removed from the connecting rod 12 and bearing inserts (not shown) may be positioned, one on the connecting rod 12 and the other on the bearing cap 14. Thereafter, the bearing cap 14 with its insert may be reassembled with the connecting rod 12 and its insert around the crank pin of a crankshaft.

It is important to the smooth and long lasting operation of the connecting rod 12 and the bearing inserts that the bearing cap 14 be reattached to the connecting rod 12 in precisely the same position which it had during machining of the semi-cylindrical bearing support surfaces 22 and 24. If the bearing cap 14 is slightly out of alignment, one portion of the bearing may act as a wiper and remove necessary lubricating oil from the surface of the crankshaft resulting in heat build-up, premature wear of the components, and possibly catastrophic failure.

In order to maintain precise alignment of the bearing cap 14 and the connecting rod 12, through bores 26 (Figure 2) are formed through opposite sides of the bearing cap 14, and matching bores or counterbores 28 are formed in the adjacent surfaces of the connecting rod 12 in aligment with the bores 26 and of the same diameter as the bores 26. Although only the bore 26 and counterbore 28 on the left hand side of the connecting rod assembly 10 are shown in Figures 1 and 2 of the drawings, it will be readily understood by those skilled in the art that a similar bore and counterbore are formed on the right hand side. At the end of each counterbore 28 opposite each bore 26 is a screw-threaded passage 36 having a diameter somewhat smaller than that of the counterbore 28. Alternatively, the through-bores 26 may be provided, in the connecting rod 12 and counterbores 28 and screw-threaded passages 36 provided in the bearing cap 14 if desired. Also, the counterbores 28 could be through-bores and nuts provided on the ends of the bolt assemblies 16 rather than providing screw-threaded passages 36 therefor if desired.

Each bore 26 extends from the outside surface 30 of the bearing cap 14 through to the parting surface 32 of the bearing cap 14. When assembled for the machining of the bearing insert surfaces 22 and 24, the bore or counterbore 28 in the connecting rod 12 forms a continuation of the respective bore 26. Where a counterbore 28 is provided, each counterbore 28 extends inward from the parting surface 34 of the connecting rod 12, and terminates in the screw-threaded passage 36 which is coaxial therewith and the combined counterbore 28 and passage 36 extends all the way through the associated end portion of the connecting rod 12. The bores 26, counterbores 28 and screw-threaded passages 36 may be formed while the connecting rod 12 and bearing cap 14 are clamped rigidly in place for the machining of the semicylindrical bearing support surfaces 22 and 24.

The bolt of the bolt assembly 16 preferably includes a conventional head portion 40 (Figure 3), and a screw-threaded end portion 42 at the end opposite the head portion 40. Intermediate the ends of the bolt is a reduced diameter shank portion 44 extending coaxially between the head portion 40 and the screw-threaded end portion 42. A resilient-sleeve 46 surrounds the reduced diameter shank portion 44 of the bolt of the assembly 16. The resilient sleeve 46 is desirably formed of a relatively stiff resilient material such as spring steel, and is generally tubular with an axially extending slot 48 extending through the wall of the sleeve and running the entire length thereof. Alternatively, for certain applications, the resilient sleeve 46 could be made of a suitably stiff but resilient plastics material. Also, instead of making the slot 48 straight as shown in Figures 3 and 4, a spiral slot 49 could be provided in the sleeve 50 as shown in Figure 6 if desired.

The screw-threaded end portion 42 of the bolt of the assembly 16 shown in Figures 3 and 4 has a maximum outside diameter D3 which is somewhat greater than the inside diameter D1 of the sleeve 46. Also, the bolt head 40 is larger than the outside diameter D4 of the sleeve. Accordingly, the sleeve 46 is held captive on the reduced diameter shank portion 44 by the head 40 and the screw-threaded end portion 42. Also, the resilient sleeve 46 has an inside diameter D1 (Figure 4) which is slightly larger than the outside diameter D2 of the shank portion 44 so that the resilient sleeve 46 is rotatable about the shank portion 44.

Alternatively, the maximum diameter of the screw-threaded end portion 42 could be the same as that of the shank portion 44, in which event the resilient sleeve 46 would either not be retained on the bolt of the assembly or some other means would have to be provided for that purpose. In the aligment bolt assembly 70 shown in Figure 7, the screw-threaded end portion 72 has the same outside diameter as the shank portion 74. To retain the resilient sleeve 76 on the shank portion 74, a ridge 78 may be rolled on the shank portion 74 axially inwardly of the screw-threaded end portion 72. In that instance, the resilient sleeve 76 will be retained between the bolt head 79 and ridge 78. Also, an additional ridge 80 may be rolled on the shank portion 74 adjacent the opposite end of the resilient sleeve 76 to retain the sleeve 76 between the ridges 78, 80 which may be located anywhere along the length of the shank portion 74. This would be particularly advantageous in an application where the shank portion 74 is required to be relatively long and the resilient sleeve 76 need only be of a relatively short length, but its location along the length of the shank portion is critical. The end faces 82, 84 of the ridges 78, 80 which face the adjacent ends of the resilient sleeve 76 desirably extend substantially perpendicular from the shank portion 74 to provide positive mechanical stop shoulders preventing the resilient sleeve 76 from being inadvertently disengaged from the bolt assembly. As shown, the outside diameter of the ridges 78, 80 is greater than the inside diameter of the resilient sleeve 76 and less than the outside diameter of the resilient sleeve 76.

Even when the maximum diameter of the screw-threaded end portion 90 of the bolt assembly 92 is made greater than the shank portion 94 as shown in Figure 8, it may be desirable to roll a ridge 96 on the shank portion 94 inwardly of the screw-threads 90 to retain the resilient sleeve 98 on the shank 94, so that the resilient sleeve 98 does not damage the screw-threads during removal of the bolt assembly from the aligned parts. In that instance, the outside diameter of the ridge 96 is desirably formed to be approximately the same as the maximum diameter of the enlarged screw-threaded end portion 90 and in any event less than the outside diameter of the resilient sleeve 98 and greater than the inside diameter of the sleeve 98.

Also, sufficient clearance is desirably provided between the adjacent ends of the resilient sleeve 98 and ridge 96 to permit outward displacement of metal from the shank 94 from opposite sides of the ridge during its formation as further shown in Figure 8 to reduce the amount of metal that would otherwise have to be pushed out from one side only to form the ridge as shown in Figure 7. This reduces the depth of the ridge grooves 99 adjacent opposite sides of the ridge 96 for increased strength.

The outer diameter of the enlarged screw-threaded portion 100 or ridges 102, 104 could be made smaller and still retain resilient sleeve 106 on the bolt assembly 108 by providing an inturned end 110 on one or both ends of the resilient sleeve 106 as further shown in Figure 9.

When the bolt assembly 16 (or 70 or 92 or 108) is inserted into bore 26, the screw-threaded end portion 42 (or 72 or 90 or 100) of the bolt assembly 16, 70, 92, 108 clears the bore 26 because the screw-threaded end portion 42, 72, 90, 100 has a smaller diameter. However, the outside diameter of the resilient sleeve 46 (or 76 or 98 or 106) is slightly larger than the inside diameter of the bore 26. Therefor the resilient sleeve 46 must be slightly diametrically compressed in order to fit into the bore 26.

To facilitate inserting the resilient sleeve 46 (or 76 or 98 or 106) into the bore 26, the sleeve 46, 76, 98, 106 may be provided with a bevelled leading edge 56 which may be conveniently formed either by a grinding or other machining operation or simply by the shearing process which cuts the spring material of which the sleeve 46, 76, 98, 106 is made. As the sleeve 46, 76, 98, 100 is compressed radially and forced into the bore 26, the edges 58 of the slot 48 of the sleeve move slightly closer together.

The bolt assembly is inserted through the bore 26 and into the bore or counterbore 28 which is of the same diameter as the bore 26 and slightly greater than the bore of the screw-threaded end portion 42 (or 72 or 90 or 100). Thereafter, the screw-threaded end portion 42, 72, 90, 100 of the bolt of the assembly may be screwed into the screw-threaded passage 36 in the connecting rod 12, or if the bore 28 extends all the way through, a nut may be threaded onto the protruding screw-threaded end portion of the bolt of the assembly, and the head portion 40 may be tightened to the desired tightness.

As the bolt assembly is tightened, the head portion 40 bears against the outer end 60 of the resilient sleeve 46 (or 76 or 98 or 106) and forces the sleeve into the bore or counterbore 28. The resilient sleeve 46 is longer than the length of the bore 26 but somewhat shorter than the combined lengths of the bore 26 and bore or counterbore 28 so that as the bolt assembly is tightened into place, of necessity, the portion of the resilient sleeve 46 closest to the screw-threaded end portion 42 of the bolt of the assembly extends across the parting surfaces 32 and 34 and is received in the bore or counterbore 28. This assures that the resilient sleeve 46 will operate to align the bore 26 and bore or counterbore 28 and therefore the bearing support surfaces 24 and 22 on the bearing cap 14 and connecting rod 12, respectively. Alternatively, the length of the resilient sleeve could be reduced by retaining the sleeve in a desired location along the length of the shaft portion of the bolt in the manner previously described.

The bolt assembly may be formed using conventional techniques from a bolt blank 62 (Figure 5) which has a conventional head portion 40 already formed and a shank 64 of uniform diameter. The shank 64 has the same diameter as the reduced diameter shank portion 44 (Figure 3) of the finished bolt assembly. The resilient sleeve 46 (Figure 5) may be inserted onto the shank 64 so that the end portion 60 abuts the head portion 40 leaving the distal end portion of the shank 64 exposed for the rolling of screw-threads thereon to form the screw-threaded end portion 42. This displaces some material of the shank 64 radially outward until the screw-threaded end portion has a diameter larger than the inside diameter of the resilient sleeve 46, thus capturing the spring pin 46 on the bolt assembly. The screw-threaded end portion 72 shown in Figure 7 may be cut into the shank portion 74, so that the screw-threaded end portion has the same outside diameter as the shank portion 74, or the screw-threaded end portion 90 may have a larger diameter than the shank portion 94 as shown in Figure 8. After the resilient sleeve 76 or 98 is inserted onto the shank portion, the ridges 78 and/or 80 and 96 may be rolled on the shank portion adjacent one or both ends of the sleeve to retain the sleeve on the shank portion.

Several advantages from this construction are readily apparent. The resilient sleeve 46 (or 76 or 98 or 106) tightly engages the bore 26 and bore or counterbore 28 thus assuring good alignment of the bearing support surfaces. The diameters of the bores or bore and counterbore need not be held to as close a tolerance as would otherwise be required since the resilient sleeve 46 (or 76 or 98 or 106) is resilient and can accommodate some variation. The only necessary element of sizing the bore 26 or counterbore 28 is that they be of substantially the same diameter, which diameter is slightly smaller than the outside diameter of the resilient sleeve 46. However, this condition is easily achieved by forming both the bore 26 and bore or counterbore 28 at the same time using the same drill bit or other cutting tool. Also, because the resilient sleeve 46 (or 76 or 98 or 106) is retained on the bolt assembly and the bolt is rotatable independently of the sleeve, the screw-threaded end portion 42 (or 72 or 90 or 100) need not be made precisely concentric with the shank portion 44 (or 74 or 94), thus reducing the cost of manufacturing. Moreover, once the bolt assemblies are inserted into the bores 26 in the bearing cap 14 or other part, the resilient sleeve 46 (or 76 or 98 or 106) holds them in place, which speeds assembly. As a result of using the bolt assembies together with bores 26 and bores or counterbores 28, the connecting rod assembly 10 or other parts are more readily assembled than before, and accurate alignment of the bearing support surfaces 22 and 24 is assured.

From the foregoing, it is apparent that the present invention overcomes the disadvantages of the prior art by greatly reducing the cost of maintaining the bearing cap 14 or other part in accurate alignment with the connecting rod 12 or another part. This is accomplished by means of a bolt assembly which includes a bolt having a conventional head end portion, a threaded end portion, and a shank portion between the head and threaded end portions. A resilient sleeve surrounds the shank portion and is retained thereon by the head of the bolt at one end and larger diameter threads at the other end, or by one or more ridges on the shank portion adjacent one or both ends of the sleeve. Although the inside diameter D1 of the sleeve shown in Figures 2 and 3 is smaller than the inside diameter of the enlarged threaded end portion, the outside diameter of the sleeve is larger than the outside diameter of the threads. The same is true of the Figure 8 embodiment.

When the bolt assembly of the present invention is inserted into alignment passages, i.e. through bore 26 through bearing cap 14 and bore or counterbore 28 in connecting rod 12, the resilient sleeve 46 (or 76 or 98 or 106) is slightly compressed and tightly grips both the bore and bore or counterbore. The resiliency of the sleeve material ensures that the bore 26 and bore or counterbore 28 are kept in perfect alignment.

## Claims

1. A bolted assembly (10) comprising first and second parts (12, 14), bores (26) extending through one of said parts (14) and additional bores (28) provided in the other of said parts (12), the associated bores (26) and additional bores (28) in said parts (12, 14) being of equal diameter and being aligned when said parts (12, 14) are aligned, a bolt having a head portion (79) at one end, a screw-threaded portion (72, 90, 100) at the other end, a shank portion (74, 94) between them, and a slotted resilient sleeve (76, 98, 106) surrounding the shank portion (74, 94), an annular ridge (78, 96, 102) being provided intermediate said sleeve (76, 98, 106) and said screw-thread portion (72, 90, 100) to retain the sleeve (76, 98, 106) on the shank portion (74, 94), the sleeve (76, 98, 106) having an external diameter greater than the outside diameter of said screw-thread portion (72, 90, 100) and its internal diameter or miniumum internal diameter being greater than the diameter of the shank portion (74, 94) and less than the outside diameter of the annular ridge (78, 96, 102) the arrangement being such that in use the slotted resilient sleeve (76, 98, 106) is compressed to the diameter of said bores (26, 28) and maintains the parts (12, 14) in alignment, characterised in that the annular ridge (78, 96, 102) is located on said shank portion (74, 94) and in that the sleeve (76, 98, 106) has an external diameter greater than the outside diameter of the annular ridge (78, 96, 102).

2. An assembly as claimed in claim 1, in which the resilient sleeve (46, 76, 98, 106) of the bolt assembly (16, 70, 92, 108) has an axial length greater than the length of the bore (26) in one of said parts (14) and less than the combined lengths of the associated bores (26, 28) in both of said parts (12, 14).

3. An assembly as claimed in claim 1 or 2, in which the shank portion (74) is provided with a second annular ridge (84, 104) located intermediate said resilient sleeve (46, 76, 98, 106) and said head portion (40, 79) and which has an outside diameter greater than the internal diameter or minimum internal diameter of the resilient sleeve (46, 76, 98, 106) and less than the outside diameter of the resilient sleeve (46, 76, 98, 106).

4. An assembly as claimed in claim 1, 2 or 3 in which the resilient sleeve (46, 76, 98, 106) has a bevelled end face (56) at the end facing the screw-threaded portion (42, 72, 90, 100) to facilitate entry of said resilient sleeve (46, 76, 98, 106) into a bore.

5. An assembly as claimed in any preceding claim, in which the resilient sleeve (46, 76, 98, 106) has an inturned inwardly directed end face (110) at least at one end.

6. A bolt assembly (70, 92, 108) for use in securing and maintaining two or more parts (12, 14) having bores (26, 28) therein in assembled aligned relationship, comprising a bolt having a head portion (79) at one end, a screw-threaded portion (72, 90, 100) at the other end, a shank portion (74, 94) between them, and a slotted resilient sleeve (76, 98, 106) surrounding the shank portion (74, 94), an annular ridge (78, 96, 102) being provided intermediate the sleeve (76, 98, 106) and the screw-thread portion (72, 90, 100) to retain the sleeve (76, 98, 106) on the shank portion (74, 94), the sleeve (76, 98, 106) having an internal diameter or minimum internal diameter greater than the diameter of the shank portion (74, 94) and less than the outside diameter of the annular ridge (78, 96, 102) and an external diameter greater than that of the screw-thread portion (72, 90, 100) characterised in that the annular ridge (78, 96, 102) is located on said shank portion (74, 94) and in that the sleeve (46, 76, 98, 106) has an external diameter greater than the outside diameter of the annular ridge (78, 96, 102).

## Patentansprüche

1. Verschraubter Aufbau (10) mit ersten und zweiten Teilen (12, 14), wobei sich Bohrungen (26) durch eines der Teile (14) erstrecken und wobei zusätzliche Bohrungen (28) in dem anderen der Teile (12) vorgesehen sind, wobei die zugehörigen Bohrungen (26) und die zusätzlichen Bohrungen (28) in den Teilen (12, 14) gleichen Durchmesser haben und miteinander fluchten, wenn die Teile (12, 14) miteinander ausgerichtet sind, wobei ein Bolzen einen Kopfabschnitt (79) an einem Ende, einen Schraubgewindeabschnitt (72, 90, 100) an dem anderen Ende, einen Schaftabschnitt (74, 94) dazwischen und eine geschlitzte Federhülse (76, 98, 106) hat, welche den Schaftabschnitt (74, 94) umgibt, wobei ein ringförmiger Steg (78, 96, 102) zwischen der Hülse (76, 98, 106) und dem Shraubgewindeabschnitt (72, 90, 100) vorgesehen ist, um die Hülse (76, 98, 106) an dem Schaftabschnitt (74, 94) zu halten, die Hülse (76, 98, 106) einen Außendurchmesser hat, der größer ist als der Außendurchmesser des Schraubgewindabschnittes (72, 90, 100) und deren Innendurchmesser oder minimaler innerer Durchmesser größer ist als der Durchmesser des Schaftabschnittes (74, 94) und kleiner als der Außendurchmesser des ringförmigen Steges (78, 96, 102), wobei die Anordnung derart ist, daß im Gebrauch die geschlitzte Federhülse (76, 98, 106) auf den Durchmesser der Bohrungen (26, 28) zusammengedrückt wird und die Teile (12, 14) in Flucht miteinander hält, dadurch gekennzeichnet, daß der ringförmige Wulst bzw. Steg (78, 96, 102) an dem Schaftabschnitt (74, 94) angeordnet ist und daß die Hülse (76, 98, 106) einen äußeren Durchmesser hat, der größer ist als der Außendurchmesser des ringförmigen Steges (78, 96, 102).

2. Aufbau nach Anspruch 1, bei welchem die Federhülse (46, 76, 98, 106) des geschraubten Aufbaues (16, 70, 92, 108) eine axiale Länge hat, die größer ist als die Länge der Bohrung (26) in einem der Teile (14) und geringer ist als die kombinierten Längen der zusammengehörigen Bohrungen (26, 28) in den beiden Teilen (12, 14).

3. Aufbau nach Anspruch 1 oder 2, bei welchem der Schaftabschnitt (74) mit einem zweiten ringförmigen Steg (84, 104) versehen ist, der zwischen der Federhülse (46, 76, 98, 106) und dem Kopfabschnitt (40, 79) angeordnet ist und der einen Außendurchmesser hat, der größer ist als der innere Durchmesser oder minimale innere Durchmesser der Federhülse (46, 76, 98, 106) und auch geringer ist als der Außendurchmesser der Federhülse (46, 76, 98, 106).

4. Aufbau nach Anspruch 1, 2 oder 3, bei welchem die Federhülse (46, 76, 98, 106) eine abgeschrägte Vorderfläche bzw. Endfläche (56) an dem Ende hat, welches dem Schraubgewindeabschnitt (42, 74, 90, 100) zugewendet ist, um den Eintritt der Federhülse (46, 76, 98, 106) in eine Bohrung zu erleichtern.

5. Aufbau nach einem der vorstehenden Ansprüche, bei welchem die Federhülse (46, 76, 98, 106) eine nach innen gewendete, einwärts gerichtete Endfläche (110) an zumindest einem Ende hat.

6. Verschraubter Aufbau (70, 92, 108) für die Verwendung zum Befestigen und Halten zweier oder mehrerer Teile (12, 14), die Bohrungen (26, 28) haben, die in montiertem Zustand miteinander fluchten, mit einem Bolzen, der einen Kopfabschnitt (79) an einem Ende, einen Schraubgewindeabschnitt (72, 90, 100) an dem anderen Ende, einen Schaftabschnitt (74, 94) dazwischen und eine geschlitzte Federhülse (76, 98, 106) hat, welche den Schaftabschnitt (74, 94) umgibt, wobei ein ringförmiger Wulst (78, 96, 102) zwischen der Hülse (76, 98, 106) un dem Schraubgewindeabschnitt (72, 90, 100) vorgesehen ist, um die Hülse (76, 98, 106) auf dem Schaftabschnitt (74, 94) zu halten, wobei die Hülse (76, 98, 106) einen Innendurchmesser oder minimalen Innendurchmesser hat, der größer ist als der Durchmesser des Schaftabschnittes (74, 94) und kleiner ist als der Außendurchmesser des ringförmigen Wulstes (78, 96, 106) und einen Außendurchmesser hat, der größer als der des Schraubgewindeabschnittes (72, 90, 100) ist, dadurch gekennzeichnet, daß der ringförmige Steg bzw. Wulst (78, 96, 102) am dem Schaftabschnitt (74, 94) angeordnet ist und daß die Hülse (46, 76, 98, 106) einen Außendurchmesser hat, der größer ist als der Außendurchmesser des ringförmigen Wulstes (78, 96, 102).

## Revendications

1. Assemblage par vissage (10) comprenant une première et seconde pièce (12, 14), des alésages (26) s'étendant à travers une (14) desdites pièces et des alésages supplémentaires (28) prévus dans l'autre (12) desdites pièces, les alésages associés (26) et les alésages supplémentaires (28) dans lesdites pièces (12, 14) étant d'égal diamètre et étant alignés lorsque lesdites pièces (12, 14) sont alignées, une vis comportant une tête (79) à une extrémité, une portion filetée (72, 90, 100) à l'autre extrémité, une tige (74, 94) entre elles, et une douille élastique fendue (76, 98, 106) entourant la tige (74, 94), une crête annulaire (78, 96, 102) étant prévue à l'intermédiaire de ladite douille (76, 98, 106) et de ladite portion filetée (72, 90, 100) pour retenir la douille (76, 98, 106) sur la tige (74, 94), la douille (76, 98, 106) présentant un diamètre extérieur plus grand que le diamètre extérieur de ladite portion filetée (72, 90, 100) et son diamètre intérieur ou diamètre intérieur minimal étant supérieur au diamètre de la tige (74, 94) et inférieur au diamètre extérieur de la crête annulaire (78, 96, 102), l'agencement étant tel qu'a l'utilisation la douille élastique fendue (76, 98, 106) est comprimée sur le diamètre desdits alésages (26, 28) et maintient les pièces (12, 14) en alignement, caractérisé en ce que la crête annulaire (78, 96, 102) est située sur ladite tige (74, 94) et en ce que la douille (76, 98, 106) présente un diamètre extérieur plus grand que le diamètre extérieur de la crête annulaire (78, 96, 102).

2. Assemblage selon la revendication 1, dans lequel la douille élastique (46, 76, 98, 106) de l'assemblage par vissage (16, 70, 92, 108) présente une longueur axiale supérieure à la longueur de l'alésage (26) dans l'une (14) desdites pièces et inférieure aux longueurs combinées des alésages associés (26, 28) dans lesdites deux pièces (12, 14).

3. Assemblage selon la revendication 1 ou 2, dans lequel la tige (74) est dotée d'une seconde crête annulaire (84, 104) située à l'intermédiaire de ladite douille élastique (46, 76, 98, 106) et de ladite tête (40, 79) et qui présente un diamètre extérieur supérieur au diamètre intérieur ou diamètre intérieur minimal de la douille élastique (46, 76, 98, 106) et inférieur au diamètre extérieur de la douille élastique (46, 76, 98, 106).

4. Assemblage selon la revendication 1, 2 ou 3 dans lequel la douille élastique (46, 76, 98, 106) comporte une face d'extrémité biseautée (56) à l'extrémité faisant face à la portion filetée (42, 72, 90, 100) afin de faciliter l'entrée de ladite douille élastique (46, 76, 98, 106) dans un alésage.

5. Assemblage selon l'une quelconque des revendications précédentes, dans lequel la douille élastique (46, 76, 98, 106) comporte une face d'extrémité recourbée vers l'intérieur (110) au moins à une extrémité.

6. Assemblage par vissage (70, 92, 108) pour utilisation dans la fixation et le maintien de deux pièces (12, 14) ou davantage comportant des alésages (26, 28) en relation d'alignement par assemblage, comprenant une vis comportant une tête (79) à une extrémité, un portion filetée (72, 90, 100) à l'autre extrémité, une tige (74, 94) entre elles, et une douille élastique fendue (76, 98, 106) entourant la tige (74, 94), une crête annulaire (78, 96, 102) étant prévue à l'intermédiaire de ladite douille (76, 98, 106) et de ladite portion filetée (72, 90, 100) pour retenir la douille (76, 98, 106) sur la tige (74, 94), la douille (76, 98, 106) présentant un diamètre intérieur ou diamètre intérieur minimal supérieur au diamètre de la tige (74, 94) et inférieur au diamètre extérieur de la crête annulaire (78, 96, 102) et un diamètre extérieur plus grand que celui de la portion filetée (72, 90, 100) caractérisé en ce que la crête annulaire (78, 96, 102) est située sur ladite tige (74, 94) et ce que la douille (46, 76, 98, 106) présente un diamètre extérieur supérieur au diamètre extérieur de la crête annulaire (78, 96, 102).

Fig.1

Fig.2

Fig.3

Fig.4

Fig.5

Fig. 6

Fig. 7

Fig. 8

Fig. 9